# EUROPÄISCHE PATENTSCHRIFT

(11) **EP 1 418 067 B1**
(45) Veröffentlichungstag und Bekanntmachung des Hinweises auf die Patenterteilung: **02.06.2010**
(21) Anmeldenummer: 03450231.0
(22) Anmeldetag: 15.10.2003
(51) Int. Cl.: B60D 1/42, B60D 1/14

(54) **Zugöse**
Towing eye
Anneau de remorquage

(30) Priorität: 11.11.2002 AT 16962002
(43) Veröffentlichungstag der Anmeldung: 12.05.2004
(73) Patentinhaber: Scharmüller, Josef, A-4870 Vöcklamarkt (AT)
(72) Erfinder: Scharmüller, Josef, A-4870 Vöcklamarkt (AT)
(74) Vertreter: Gibler, Ferdinand

(56) Entgegenhaltungen:
- EP-A- 0 650 857
- DE-A- 3 049 456
- DE-U- 6 910 130
- US-A- 2 356 998
- US-A- 4 157 189
- US-A- 5 725 229
- US-A1- 2001 038 191
- XP002273890 Gefunden im Internet: URL:www.buyersproducts.com> [gefunden am 2004-03-17]

## Beschreibung

Die Erfindung betrifft eine Zugöse einer Kupplung mit einem, insbesondere einen Ring, eine Kugelpfanne od. dgl. umfassenden, Kuppelelement, einem Abstandselement und einem eine im wesentlichen rechteckige, insbesondere im wesentlichen quadratische, Grundfläche aufweisenden Flansch mit Eckenbereichen und zwischen den Eckenbereichen entlang der Seiten des Flansches angeordneten Seitenmittenbereichen, wobei in den Eckenbereichen Befestigungsöffnungen vorgesehen sind und die Seitenmittenbereiche frei von Befestigungsöffnungen ausgebildet sind, wobei - in Gebrauchslage gesehen - in zumindest einer im wesentlichen horizontalen Reihe wenigstens vier Befestigungsöffnungen und in zumindest einer im wesentlichen vertikalen Reihe wenigstens vier Befestigungsöffniingen vorgesehen sind.

Derartige Zugösen werden insbesondere bei Kupplungen für Kraftfahrzeuge, insbesondere landwirtschaftliche Maschinen, Busse, Lkws od. dgl. eingesetzt und dienen insbesondere der Übertragung von Längskräften, Scherkräften und Biegemomenten zwischen einem Anhänger und einem Zugfahrzeug und/oder einem weiteren Anhänger.

Bekannte derartige Zugösen weisen einen Flansch mit wenigstens sechs Befestigungsöffnungen auf, wobei in Gebrauchslage gesehen in der Mitte der oberen Seite, in der Mitte der unteren Seite und in den Eckenbereichen jeweils eine Befestigungsöffnung angeordnet ist. Die Befestigungsöffnungen sind für die Aufnahme von Befestigungsschrauben vorgesehen, um die Zugöse an einer Stützplatte od. dgl. zu befestigen. Nachteilig an diesen bekannten Zugösen ist, dass die von den Befestigungsschrauben übertragbaren Kräfte und

Momente geringer sind als die der sonstigen Bauteile der Zugöse und somit für die Bestimmung der Belastbarkeit der gesamten Zugöse maßgeblich sind.

Um die Belastbarkeit der Zugöse zu erhöhen, wurden - in Betriebslage gesehen - an der rechten und linken Seite des Flansches jeweils mittig eine zusätzliche Befestigungsöffnung vorgesehen. Nachteilig an diesen bekannten Zugösen ist, dass durch die zusätzlichen seitlichen Befestigungsöffnungen und den zusätzlichen Befestigungsschrauben nur eine Steigerung des von den Befestigungsschrauben übertragbaren Längskräfte, nicht aber des übertragbaren Biegemomentes erreicht wird. Weiters ist bei diesen Zugösen nachteilig, dass ein Versagen oftmals in dem dem Flansch angrenzenden Bereich des Abstandselementes auftritt.

Aus der EP 0 650 857 A1 ist eine Kupplung mit einem Fangmaul bekannt, bei dem die Kupplung an einem Zugfahrzeug befestigt werden kann.

Die DE 30 49 456 A1 offenbart eine Kupplung mit einem Zughaken, wobei die Kupplung an einem Zugfahrzeug befestigt werden kann.

Die DE 69 10 130 U betrifft eine Kupplung mit einem Fangmaul, bei dem die Kupplung an einem Zugfahrzeug befestigt werden kann.

Aus der US 2 356 998 geht eine Kupplung mit einem Zubaken und einem den Zughaken verschließenden Schwenkteil hervor, wobei die Kupplung an einem Zugfahrzeug befestigt werden kann.

Aus der US 4 157 189 A geht eine Kupplung mit einer Kupplungskugel hervor, wobei die Kupplung an einem Zugfahrzeug befestigt werden kann.

Die US 2001/0038191 A1 betrifft eine Kupplung mit einer Kupplungskugel, wobei die Kupplung an einem Zugfahrzeug befestigt werden kann.

Die US 5 725 229 A offenbart eine Kupplung mit einer Mehrzahl alternativ verwendbarer Kupplungskugeln und einem Kupplungsbolzen, wobei die Kupplung an einem Zugfahrzeug befestigt werden kann.

Aus dem Internetauftritt der Buyers Products Company geht eine Zugöse mit in den Eckenbereichen angeordneten Befestigungsöffnungen hervor.

Aus dem Internetauftritt von Eastem Marine Online geht eine Zugöse, sowie eine Anschlussplatte für eine Zugöse hervor, welche Befestigungsöffnungen aufweist, welche in zwei vertikalen Reihen angeordnet sind.

Aufgabe der Erfindung ist es, eine Zugöse der eingangs genannten Art anzugeben, bei der die bekannten Nachteile vermieden werden, die insgesamt eine hohe Belastbarkeit aufweist und die mit einer Stützplatte od. dgl. verbindbar ist, wobei die Verbindung insbesondere hohe Längskräfte und Biegemomente aufnehmen kann.

Eine weitere Aufgabe der Erfindung ist es, eine Zugöse der eingangs genannten Art anzugeben, die einfach und kostengünstig herstellbar ist, die eine hohe Lebensdauer und

Sicherheit und eine geringe Ausfallswahrscheinlichkeit aufweist.

Erfindungsgemäß wird dies dadurch erreicht, dass in jedem der Eckenbereiche jeweils drei Befestigungsöffnungen vorgesehen sind, wobei - in Gebrauchslage gesehen - in zwei im wesentlichen horizontalen Reihen und in zwei im wesentlichen vertikalen Reihen jeweils vier der Befestigungsöffnungen angeordnet sind.

Dadurch ergibt sich der Vorteil, dass zwischen dem Flansch und dem Abstandselement ein verrundeter Übergangsbereich ausgebildet werden kann, der in den Seitenmittenbereichen nahe an die Seiten des Flansches heranreicht und der nicht von Schraubenauflagen od. dgl. unterbrochen wird. Dadurch können Spannungsspitzen aufgrund von Kerbwirkungen im Übergangsbereich, die sich bei der Anordnung von Schraubenauflagen od. dgl. in diesem Bereich zwangsläufig ergeben, vermieden werden, wodurch die Belastbarkeit der Zugöse im Übergangsbereich verbessert wird. In den Eckenbereichen können die Befestigungsöffnungen und Schraubenauflagen außerhalb des Übergangsbereiches ausgebildet werden, wobei größere Befestigungsschrauben vorgesehen werden können, als in den Seitenmittenbereichen angeordnet werden könnten. Anstelle einer großen Befestigungsschraube können in den Eckenbereichen auch mehrere kleinere Schrauben vorgesehen sein. Durch diese Anordnung der Befestigungsöffnungen kann der Querschnitt des Abstandselementes und/oder der Radius des Übergangsbereiches besonders groß ausgebildet werden, wodurch die Belastbarkeit der Zugöse verbessert werden kann. Ein weiterer Vorteil der Erfindung ist es, dass die Oberfläche der Eckenbereiche um die Befestigungsöffnungen auf einer Drehmaschine in einem Arbeitsgang unter Ausbildung von Schraubenauflagen abgedreht werden können, wodurch die erfindungsgemäße Zugöse einfach und kostengünstig herstellbar ist. Schraubenauflagen um Befestigungsöffnungen in den Seitenmittenbereichen können zumindest teilweise nur mittels eines Fräsers od. dgl. hergestellt werden, da die Schraubenauflage teilweise in dem Übergangsbereich zwischen dem Abstandselement und dem Flansch angeordnet ist. Ein weiterer Vorteil der Erfindung ist, dass der Querschnitt des Abstützelementes in dem dem Flansch angrenzenden Bereich stärker ausgeführt werden kann und gegebenenfalls zusätzlich mit Rippen od. dgl. verstärkt werden kann. Ein weiterer Vorteil der Erfindung ist es, dass der Flansch im mittleren Bereich der dem Abstandselement gegenüberliegenden Seite annähernd spannungsfrei ist, wodurch eine randoffene Ausnehmung für ein Halteelement bei der Ausbildung eines gegenüber dem Abstandselement drehbaren Kuppelelementes vorgesehen werden kann. Ein weiterer Vorteil ist, dass in den Seitenmittenbereichen Leitungen für Schmiermittel od. dgl. am Flansch anliegend angeordnet werden können und nicht um oder über die Befestigungsschrauben geführt werden brauchen, wodurch die Gefahr einer Beschädigung der Leitungen verringert wird und dadurch die Sicherheit der erfindungsgemäßen Zugöse verbessert und deren Ausfallswahrscheinlichkeit verringert wird. Durch die Anordnung von zumindest vier Befestigungsöffnungen in einer im wesentlichen horizontalen Reihe kann das von den Befestigungsschrauben aufnehmbare Biegemoment vergrößert werden. Durch die Anordnung der Befestigungsöffnungen in einer im wesentlichen vertikalen Reihe kann sichergestellt werden, dass die erfindungsgemäße Zugöse in verschiedenen Positionen an einer Stützplatte od. dgl. befestigbar ist, welche eine nur geringe Anzahl an Bohrungen aufweisen braucht. Dadurch kann eine hohe Festigkeit der Stützplatte od. dgl. erreicht werden.

In Weiterbildung der Erfindung kann vorgesehen sein, dass sich die Seitenmittenbereiche über wenigstens 20% der Längserstreckung der Seiten des Flansches erstrecken. Durch diese Ausbildung kann sichergestellt werden, dass der Übergangsbereich nahe an die Seiten des Flansches in den Seitenmittenbereichen herangeführt werden kann.

Gemäß einer anderen Ausführungsform der Erfindung kann vorgesehen sein, dass in wenigstens einer der Reihen der Abstand zwischen den benachbarten Befestigungsöffnungen unterschiedlicher Eckenbereichen ein ganzzahliges Vielfaches, insbesondere das Doppelte, des Abstandes zwischen den benachbarten Befestigungsöffnungen innerhalb eines der Eckenbereiche beträgt. Dadurch kann auf einfache Weise eine Höhenverstellbarkeit der erfindungsgemäßen Zugöse bereitgestellt werden, indem in der Stützplatte od. dgl. zusätzliche Bohrungen in dem von den Befestigungsöffnungen vorgegebenen Rastermaß ausgeführt werden.

In Weiterführung der Erfindung kann vorgesehen sein, daß das Abstandselement einen eine Verrundung aufweisenden Übergangsbereich aufweist, welcher mit dem Flansch verbunden ist. Durch den verrundeten Übergangsbereich können Spannungsspitzen im Übergang zwischen dem Flansch und dem Abstandselement weitgehend vermieden werden.

Gemäß einer anderen Ausgestaltung der Erfindung kann vorgesehen sein, daß der Radius der Verrundung gleich groß oder größer als der Durchmesser wenigstens eines der Befestigungsöffnungen ist. Durch die Ausbildung der Verrundung mit einem großen Radius kann ein besonders gleichmäßiger Kraftübergang zwischen dem Flansch und dem Abstandselement erreicht werden.

In weiterer Ausbildung der Erfindung kann vorgesehen sein, daß das Kuppelelement ein Drehelement umfaßt, welches - in an sich bekannter Weise - in dem Abstandselement um eine Drehachse drehbar gelagert und mittels eines Halteelementes, insbesondere eines Schweißringes od. dgl., in Längsrichtung der Drehachse gesichert ist, und daß der Flansch eine randoffene Aufnahmeöffnung zur Aufnahme von zumindest einem Teil des Halteelementes aufweist. Durch die Aufnahmeöffnung kann die Baulänge der erfindungsgemäßen Zugöse verringert werden. Sofern das Halteelement den Flansch nicht überragt, ist es nicht erforderlich in der Stützplatte eine Öffnung für das Halteelement vorzusehen, wodurch die Stabilität und Belastbarkeit der Kupplung verbessert werden kann.

In diesem Zusammenhang kann gemäß einer anderen Ausführungsform der Erfindung vorgesehen sein, daß zwischen dem Halteelement und dem Flansch zumindest ein in Längsrichtung der Drehachse wirkendes vorspannbares Druckelement angeordnet ist. Durch das Druckelement kann sichergestellt werden, daß die Verbindung zwischen dem Kuppelelement und dem Abstandselement im wesentlichen in Längsrichtung spielfrei ist, wodurch unerwünschte Schwingungen und Schläge weitgehend unterbunden werden können und die Lebensdauer der erfindungsgemäßen Zugöse vergrößert wird.

In weiterer Ausgestaltung der Erfindung kann vorgesehen sein, daß das Halteelement wenigstens eine Ausnehmung und/oder wenigstens eine Erhebung aufweist, welche mit dem zumindest einen Druckelement eine Verdrehsicherung ausbildet. Eine Verdrehung des Kuppelelementes gegenüber dem Abstandselement ist im Normalbetrieb nicht vorgesehen und dient insbesondere dazu, daß bei einem Unfall ein umstürzendes Element nicht ein Umstürzen eines mit diesem gekuppelten weiteren Elementes bedingt. Durch die Verdrehsicherung kann sichergestellt werden, daß sich das Kuppelelement gegenüber dem Abstandselement erst bei Überschreiten eines vorgebbaren Drehmomentes verdrehen kann, wobei die Ausbildung wenigstens einer Ausnehmung und/oder wenigstens einer Erhebung eine einfache und kostengünstig herstellbare Ausführung einer Verdrehsicherung darstellt.

Eine andere mögliche Ausführungsform der Erfindung kann darin bestehen, daß die Verdrehsicherung durch eine in die wenigstens eine Ausnehmung des Halteelementes eingreifende von dem zumindest einen Druckelement beaufschlagten Wälzkörper, insbesondere einer Kugel, einem Zylinder od. dgl., ausgebildet ist. Der Wälzkörper greift in Normalstellung der Zugöse in die Ausnehmung ein, wobei er bei Überschreiten eines vorgebbaren Drehmomentes aus der Ausnehmung herausgeführt wird und zwischen dem Druckkörper und dem Halteelement geführt wird. Bei einem Zurückdrehen des Kuppelelementes rastet der Wälzkörper wieder in der Ausnehmung ein. Durch diese Ausführungsform kann auch nach einem Unfall und dem Zurückdrehen des Kuppelelementes in definierte Lage ein sicherer Betrieb der erfindungsgemäßen Zugöse sichergestellt werden.

Gemäß einer anderen Ausführungsform der Erfindung kann vorgesehen sein, daß an dem Abstandselement zumindest eine Rippe od. dgl. angeformt ist, welche mit dem Flansch in einem der Seitenmittenbereiche verbunden ist. Durch die Anformung einer Rippe kann die Stabilität des Abstützelementes verbessert werden.

Gemäß wieder einer anderen Ausgestaltung der Erfindung kann vorgesehen sein, daß das Abstandselement und der Flansch einstückig ausgebildet sind. Durch die einstückige Ausbildung kann ein weitgehend ungestörter Kraftfluß zwischen dem Abstandselement und dem Flansch erreicht werden.

Die Erfindung wird unter Bezugnahme auf die beigeschlossenen Zeichnungen, in welchen Ausführungsformen dargestellt sind, näher beschrieben. Dabei zeigt:
Fig. 1 eine Ausführungsform einer erfindungsgemäßen Zugöse im Kreuzriß;
Fig. 2 die Zugöse gemäß Fig. 1 im Aufriß;
Fig. 3 die Zugöse gemäß Fig. 1 im Grundriß, mit einem nicht erfindungsgemäßen Flansch;
Fig. 4 eine schematische Darstellung, mit einem nicht erfindungsgemäßen Flansch;

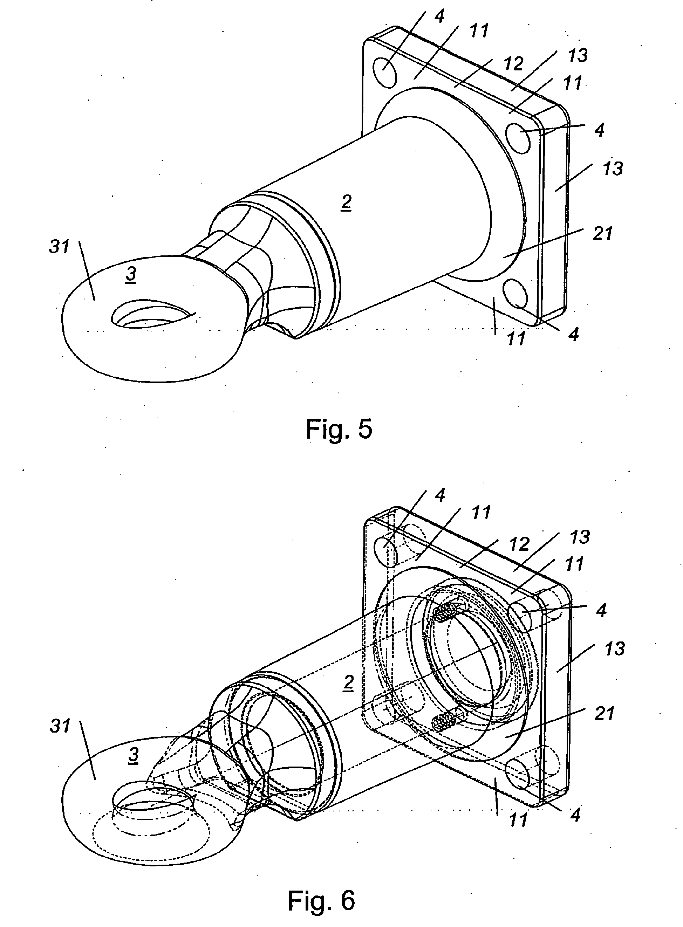

Fig. 5 die Zugöse gemäß Fig. 1 im Schrägriß;
Fig. 6 die Zugöse gemäß Fig. 1 im Schrägriß, wobei die unsichtbaren Kanten strichliert eingezeichnet sind;
Fig. 7 eine Ausführungsform einer erfindungsgemäßen Zugöse im Kreuzriß;
Fig. 8 die Zugöse gemäß Fig. 7 im Aufriß;
Fig. 9 die Zugöse gemäß Fig. 7 im Grundriß;
Fig. 10 die Zugöse gemäß Fig. 7 im Schrägriß;
Fig. 11 die Zugöse gemäß Fig. 7 im Schrägriß, wobei die unsichtbaren Kanten strichliert eingezeichnet sind;
Fig. 12 eine andere Ausführungsform einer erfindungsgemäßen Zugöse im Kreuzriß;
Fig. 13 die Zugöse gemäß Fig. 12 im Schnitt A-A gemäß Fig. 12;
Fig. 14 das Detail B gemäß Fig. 13 der Zugöse gemäß Fig. 12; und
Fig. 15 eine andere Ausführungsform einer nicht erfindungsgemäßen Zugöse im Schrägriß;

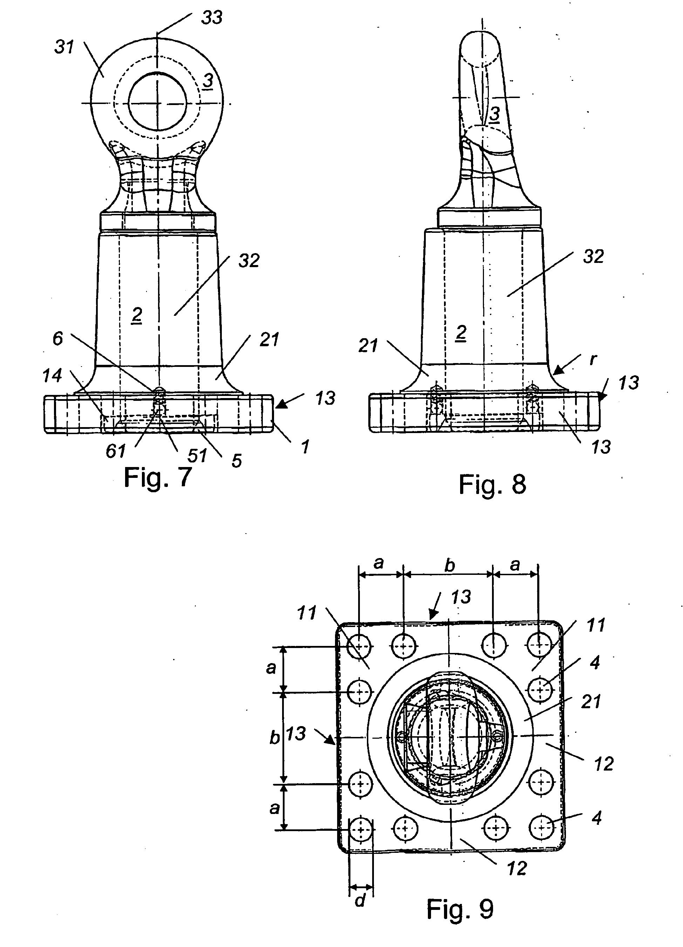

Im Fig. 7 ist eine Ausführungsform einer erfindungsgemäßen Zugöse einer Kupplung mit einem Kuppelelement 3, einem Abstandselement 2 und einem eine im wesentlichen quadratische Grundfläche aufweisenden Flansch 1 mit Eckenbereichen 11 und zwischen den Eckenbereichen 11 entlang der Seiten 13 des Flansches 1 angeordneten Seitenmittenbereichen 12, wobei in den Eckenbereichen 11 Befestigungsöffnungen 4 vorgesehen sind, dargestellt. Der Flansch 1 kann anstelle einer im wesentlichen quadratischen Grundfläche auch eine im wesentlichen rechteckige Grundfläche aufweisen, wobei die Ecken abgerundet und/oder die Seiten auch gekrümmt ausgebildet sein können. Das Kuppelelement 3 kann einen Ring 31 umfassen, welcher mit einem Zapfen mit einer Kupplungsvorrichtung kuppelbar ist. Anstelle des Ringes 31 kann auch eine Kugelpfanne od. dgl. vorgesehen sein, welche mit einer Kugel od. dgl. der Kupplungsvorrichtung kuppelbar ist, wobei die Seitenmittenbereiche 12 frei von Befestigungsöffnungen 4 ausgebildet sind.

Derartige Zugösen werden insbesondere bei Kupplungen für Kraftfahrzeuge, insbesondere landwirtschaftliche Maschinen, Busse, Lkws od. dgl. eingesetzt und dienen insbesondere der Übertragung von Längskräften und vorwiegend von der Stützlastkomponente herrührenden Scherkräften und Biegemomenten zwischen einem Anhänger und einem Zugfahrzeug und/oder einem weiteren Anhänger.

Die Befestigungsöffnungen 4 sind für die Aufnahme von Befestigungsschrauben od. dgl. vorgesehen, mittels derer die erfindungsgemäße Zugöse an einer Stützplatte od. dgl. befestigt werden kann. Durch das Vorsehen entsprechender Bohrungen in der Stützplatte od. dgl. kann das Befestigen der Zugöse an verschiedenen Positionen ermöglicht werden. Dabei wird durch die Anordnung der Befestigungsöffnungen 4 lediglich in den Eckenbereichen 11 eine hohe Stabilität der Stützplatte od. dgl. auch mit Bohrungen für die Befestigung der Zugöse an verschiedenen Positionen erreicht.

Das Abstandselement 2 kann mit dem Flansch 1 mittels eines eine Verrundung aufweisenden Übergangsbereichs 21 verbunden sein, wodurch die Spannungen im Übergangsbereich 21 gering gehalten werden können. Bei einem frei von Befestigungsöffnungen 4 ausgebildeten Seitenmittenbereich 12 kann sichergestellt werden, daß keine der Befestigungsöffnungen 4 und auch keine um die Befestigungsöffnungen 4 angeordneten Schraubenauflagen die Verrundung des Übergangsbereiches 21 schneidet, wodurch die durch Kerbwirkung hervorgerufenen Spannungsspitzen vermieden werden können. Dadurch kann die Belastbarkeit der erfindungsgemäßen Zugöse verbessert werden.

Eine besonders stabile Verbindung zwischen dem Abstandselement 2 und dem Flansch 1 kann erreicht werden, wenn das Abstandselement 2 und der Flansch 1 einstückig ausgebildet sind.

Um einen besonders günstigen Spannungsverlauf im Übergangsbereich zu erhalten kann vorgesehen sein, daß der Radius r der Verrundung gleich groß oder größer als der Durchmesser d wenigstens eines der Befestigungsöffnungen 4 ist.

Erstrecken sich die Seitenmittenbereiche 12 über wenigstens 20% der Längserstreckung der Seiten 13 des Flansches 1, so können der Übergangsbereich 21 und die Befestigungsöffnungen 4 und gegebenenfalls die Schraubenauflagen auf einfache Weise voneinander räumlich getrennt angeordnet werden, wodurch die Herstellung aller Schraubenauflagen auf einer Drehmaschine in einem Arbeitsschritt ermöglicht wird. Weiters können in den Seitenmittenbereichen 12 Leitungen für Schmiermittel od. dgl. an der erfindungsgemäßen Zugöse anliegend geführt werden, wodurch die Gefahr einer Beschädigung dieser Leitungen verringert und die Sicherheit der Zugöse verbessert wird.

Zur Verstärkung des Abstandselementes 2 kann zumindest eine Rippe 22 od. dgl. an dem Abstandselement 2 angeformt sein, welche mit dem Flansch 1 und einem der Seitenmittenbereiche 12 verbunden ist. Die Leitungen für Schmiermittel od. dgl. können auch innerhalb der Rippe 22 od. dgl. geführt und/oder ausgebildet sein.

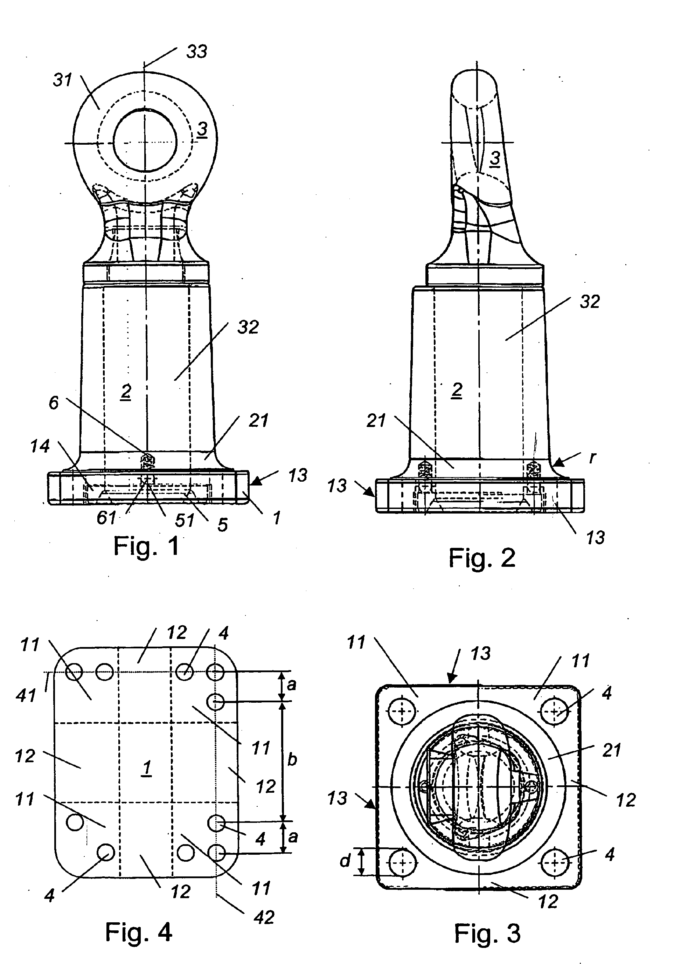

In Fig. 4 ist schematisch ein Flansch 1 dargestellt, wobei die Grenze zwischen den Seitenmittenbereichen 12 und den Eckenbereichen 11 durch strichlierte Linien angedeutet sind. In den Eckenbereichen 11 können auch zwei oder mehr Befestigungsbohrungen 11 vorgesehen sein, wobei - in Gebrauchslage gesehen - in zumindest einer im wesentlichen horizontalen Reihe 41 wenigstens vier Befestigungsöffnungen 4 vorgesehen sein können.

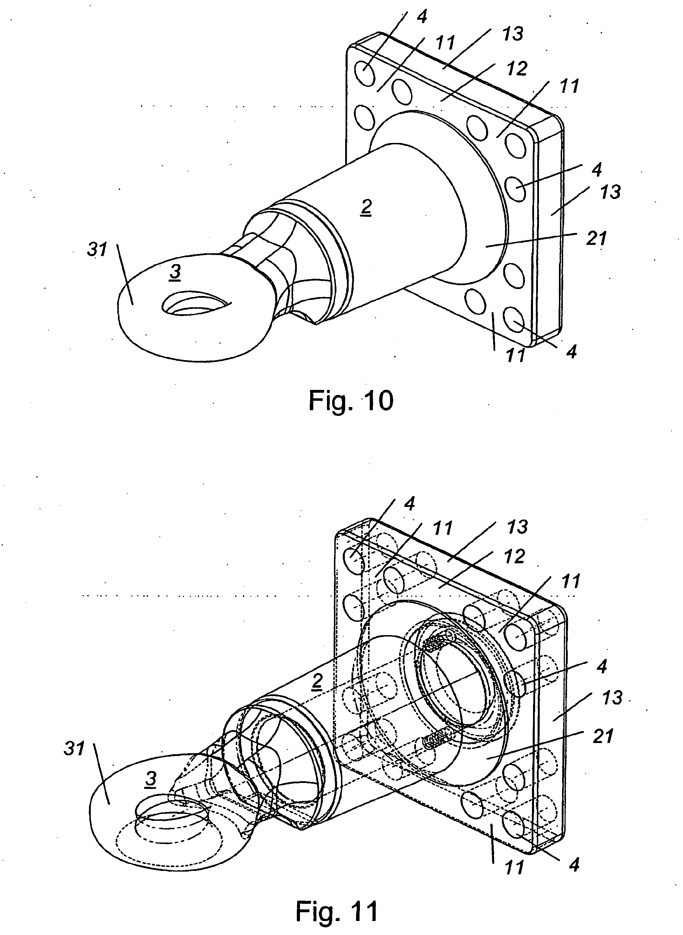

In den Fig. 7 bis 11 ist eine weitere Ausführungsform einer erfindungsgemäßen Zugöse dargestellt, bei der in jedem der Eckenbereiche 11 jeweils drei Befestigungsvorrichtungen 4 vorgesehen sind; wobei - in Gebrauchslage gesehen - zwei im wesentlichen horizontale Reihen 41 und zwei im wesentlichen vertikale Reihen 42 jeweils vier der Befestigungsöffnungen 4 angeordnet sind. Bei dieser Anordnung kann der Übergangsbereich 21 besonders groß ausgebildet werden. Weiters kann bei großen Ausführungen der erfindungsgemäßen Zugöse der Durchmesser der Befestigungsschrauben in einem handelsüblichen Bereich gehalten werden.

Als günstig hat es sich erwiesen, wenn in wenigstens einer der Reihen 41, 42 der Abstand b zwischen den benachbarten Befestigungsöffnungen 4 unterschiedlicher Eckenbereiche 11 ein ganzzahliges Vielfaches, insbesondere das Doppelte, des Abstandes a zwischen den benachbarten Befestigungsöffnungen 4 innerhalb eines der Eckenbereiche 11 beträgt. Dadurch kann erreicht werden, daß bei einer Stützplatte od. dgl., welche Bohrungen in einem Rastermaß mit dem Abstand a aufweist, die erfindungsgemäße Zugöse an verschiedenen Positionen befestigt werden kann.

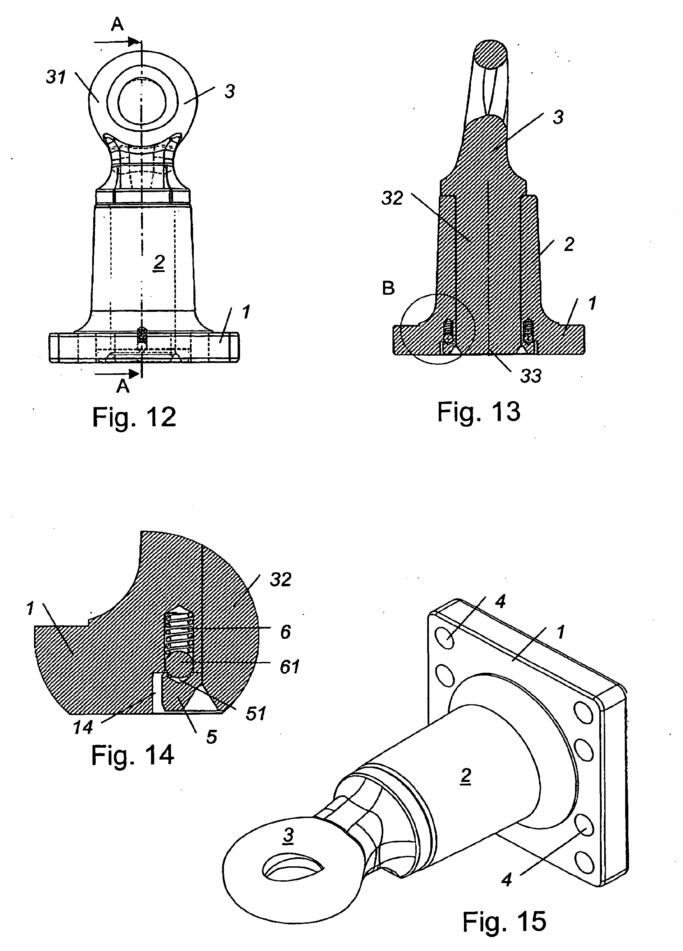

Das Kuppelelement 3 kann mit dem Abstandselement drehfest, insbesondere einstückig, verbunden sein. Bei im Fig. 7 dargestellten Ausführungsform umfaßt das Kuppelelement 3 ein Drehelement 32, welches in dem Abstandselement 2 um eine Drehachse 33 drehbar gelagert ist und mittels eines Halteelementes 5 in Längsrichtung der Drehachse 33 gesichert ist. Das Halteelement 5 kann als Schweißring ausgebildet, mit dem Drehelement verschraubt, auf dieses aufgeschrumpft od. dgl. sein. Eine kurze Bauform der erfindungsgemäßen Zugöse kann erreicht werden, wenn der Flansch 1 eine randoffene Ausnehmung 14 zur Aufnahme von zumindest einem Teil des Halteelementes 5 aufweist. In den Fig. 12 bis 14 ist eine Zugöse dargestellt, bei der ein Teil der Aufnahmeöffnung 14 vergrößert dargestellt ist.

Sofern das Halteelement 5 den Flansch 1 nicht überragt, ist es nicht erforderlich in der Stützplatte eine Öffnung für das Halteelement 5 vorzusehen, wodurch die Stabilität und Belastbarkeit der Kupplung verbessert werden kann.

Eine Verdrehung des Kuppelelementes 3 gegenüber dem Abstandselement 2 ist im Normalbetrieb nicht vorgesehen und dient insbesondere dazu, daß bei einem Unfall ein umstürzendes Element nicht ein Umstürzen eines mit diesem gekuppelten weiteren Elementes bedingt. Um eine Verschiebung des Kuppelelementes 3 gegenüber dem Abstandselement 2 weitgehend zu unterbinden kann zwischen dem Halteelement 5 und dem Flansch 1 zumindest ein in Längsrichtung der Drehachse 33 wirkendes, vorspannbares Druckelement 6 angeordnet sein. Dadurch kann sichergestellt werden, daß die Verbindung zwischen dem Abstandselement 2 und dem Kuppelelement 3 in Längsrichtung der Drehachse 33 im wesentlichen spielfrei ist, wodurch die Gefahr von unerwünschten Schwingungen und Schlägen verringert und die Sicherheit und Lebensdauer der erfindungsgemäßen Zugöse erhöht wird.

Weiters kann vorgesehen sein, daß das Halteelement 5 wenigstens eine Ausnehmung 51 und/oder wenigstens eine Erhebungen aufweist, welche mit dem zumindest einen Druckelement 6 eine Verdrehsicherung ausbildet, wodurch eine Verdrehung des Kuppelelementes 3 gegenüber dem Abstandselement 2 erst bei Überschreiten eines vorgebbaren Drehmomentes ermöglicht wird. Die Ausnehmung 51 kann als Vertiefung, insbesondere als Nut od. dgl. ausgebildet sein.

Wird die Verdrehsicherung durch eine in die wenigstens eine Ausnehmung 51 des Halteelementes 5 eingreifende von dem zumindest einen Druckelement 6 beaufschlagten Wälzkörper 61, insbesondere einer Kugel, einem Zylinder od. dgl., ausgebildet, wird eine Verdrehsicherung bereitgestellt, die nach einem Verdrehen des Kuppelelementes 3 gegenüber dem Abstandselement 2 und einem anschließenden Zurückdrehen des Kuppelelementes 3 wieder funktionsfähig ist und weiter verwendbar ist. Dabei greift der Wälzkörper 51 in Normalstellung der Zugöse in die Ausnehmung ein, wobei er bei Überschreiten des vorgebbaren Drehmomentes aus der Ausnehmung 51 herausgeführt und zwischen dem Druckkörper 6 und dem Halteelement 5 geführt wird. Bei einem Zurückdrehen des Kuppelelementes 3 in definierte Lage rastet der Wälzkörper 51 wieder in der Ausnehmung 5 ein.

## Patentansprüche

1. Zugöse einer Kupplung mit einem, insbesondere einen Ring (31), eine Kugelpfanne od. dgl. umfassenden, Kuppelelement (3), einem Abstandselement (2) und einem eine im wesentlichen rechteckige, insbesondere im wesentlichen quadratische, Grundfläche aufweisenden Flansch (1) mit Eckenbereichen (11) und zwischen den Eckenbereichen (11) entlang der Seiten (13) des Flansches (1) angeordneten Seitenmittenbereichen (12), wobei in den Eckenbereichen (11) Befestigungsöffnungen (4) vorgesehen sind und die Seitenmittenbereiche (12) frei von Befestigungsöffnungen (4) ausgebildet sind, wobei - in Gebrauchslage gesehen - in zumindest einer im wesentlichen horizontalen Reihe (41) wenigstens vier Befestigungsöffnungen (4) und in zumindest einer im wesentlichen vertikalen Reihe (42) wenigstens vier Befestigungsöffnungen (4) vorgesehen sind, **dadurch gekennzeichnet, dass** in jedem der Eckenbereiche (11) jeweils drei Befestigungsöffnungen (4) vorgesehen sind, wobei - in Gebrauchslage gesehen - in zwei im wesentlichen horizontalen Reihen (41) und in zwei im wesentlichen vertikalen Reihen (42) jeweils vier der Befestigungsöffnungen (4) angeordnet sind.

2. Zugöse nach Anspruch 1, **dadurch gekennzeichnet, dass** sich die Seitenmittenbereiche (12) über wenigstens 20% der Längserstreckung der Seiten (13) des Flansches (1) erstrecken.

3. Zugöse nach einem der Ansprüche 1 bis 2, **dadurch gekennzeichnet, dass** in wenigstens einer der Reihen (41, 42) der Abstand (b) zwischen den benachbarten Befestigungsöffnungen (4) unterschiedlicher Eckenbereiche (11) ein ganzzahliges Vielfaches, insbesondere das Doppelte, des Abstandes (a) zwischen den benachbarten Befestigungsöffnungen (4) innerhalb eines der Eckenbereiche (11) beträgt.

4. Zugöse nach einem der Ansprüche 1 bis 3, **dadurch gekennzeichnet, dass** das Abstandselement (2) einen eine Verrundung aufweisenden Übergangsbereich (21) aufweist, welcher mit dem Flansch (1) verbunden ist.

5. Zugöse nach Anspruch 4, **dadurch gekennzeichnet, dass** der Radius (r) der Verrundung gleich groß oder größer als der Durchmesser (d) wenigstens eines der Befestigungsöffnungen (4) ist.

6. Zugöse nach einem der Ansprüche 1 bis 5, **dadurch gekennzeichnet, dass** das Kuppelelement (3) ein Drehelement (32) umfasst, welches - in an sich bekannter Weise - in dem Abstandselement (2) um eine Drehachse (33) drehbar gelagert und mittels eines Halteelementes (5), insbesondere eines Schweißringes od. dgl., in Längsrichtung der Drehachse (33) gesichert ist, und dass der Flansch (1) eine randoffene Aufnahmeöffnung (14) zur Aufnahme von zumindest einem Teil des Halteelementes (5) aufweist.

7. Zugöse nach Anspruch 6, **dadurch gekennzeichnet, dass** zwischen dem Haltelement (5) und dem Flansch (1) zumindest ein in Längsrichtung der Drehachse (33) wirkendes vorspannbare Druckelement (6) angeordnet ist.

8. Zugöse nach Anspruch 7, **dadurch gekennzeichnet, dass** das Halteelement (5) wenigstens eine Ausnehmung (51) und/oder wenigstens eine Erhebung aufweist, welche mit dem zumindest einen Druckelement (6) eine Verdrehsicherung ausbildet.

9. Zugöse nach Anspruch 8, **dadurch gekennzeichnet, dass** die Verdrehsicherung durch eine in die wenigstens eine Ausnehmung (51) des Halteelementes (5) eingreifende von dem zumindest einen Druckelement (6) beaufschlagten Wälzkörper (61), insbesondere einer Kugel, einem Zylinder od. dgl., ausgebildet ist.

10. Zugöse nach einem der Ansprüche 1 bis 9, **dadurch gekennzeichnet, dass** an dem Abstandselement (2) zumindest eine Rippe (22) od. dgl. angeformt ist, welche mit dem Flansch (1) in einem der Seitenmittenbereiche (12) verbunden ist.

11. Zugöse nach einem der Ansprüche 1 bis 10, **dadurch gekennzeichnet, dass** das Abstandselement (2) und der Flansch (1) einstückig ausgebildet sind.

## Claims

1. A drawbar eye of a hitch, comprising a ring (31), hitch element (3) with a ball socket or the like, a spacer element (2) and a flange (1) with corner regions (11) having a substantially rectangular, especially square, area, and lateral central areas (12) arranged between the corner regions (11) along the sides (13) of the flange (1), with fastening openings (4) being provided in the corner regions (11) and the lateral central regions (12) being arranged to be free from fastening openings (4), with at least four fastening openings (4), as seen in the position of use, being provided in at least one substantially horizontal row (41) and at least four fastening openings (4) in at least one substantially vertical row (42), **characterized in that** three fastening openings (4) each are provided in each of the corner regions (11), with four each of the fastening openings (4), as seen in the position of use, being arranged in two substantially horizontal rows (41) and in two substantially vertical rows (42).1

2. A drawbar eye according to claim 1, **characterized in that** the lateral central regions (12) extend over at least 20% of the longitudinal extension of the sides (13) of the flange (1).

3. A drawbar eye according to one of the claims 1 to 2, **characterized in that** in at least one of the rows (41, 42) the distance (b) between the adjacent fastening openings (4) of different corner regions (11) is an integral multiple, especially twice, the distance (a) between the adjacent fastening openings (4) within one of the corner regions (11).

4. A drawbar eye according to one of the claims 1 to 3, **characterized in that** the spacer element (2) has a transitional region (21) which has a rounded portion and is connected with the flange (1).

5. A drawbar eye according to claim 4, **characterized in that** the radius (r) of the rounded portion is equally large or larger than the diameter (d) of at least one of the fastening openings (4).

6. A drawbar eye according to one of the claims 1 to 5, **characterized in that** the hitch element (3) comprises a rotary element (32) which in the known manner is rotatably held in the spacer element (2) about a rotational axis (33) and is secured by means of a holding element (5), especially a welding ring or the like, in the longitudinal direction of the rotational axis (33), and the flange (1) comprises an open-edged accommodating opening (14) for accommodating at least a part of the holding element (5).

7. A drawbar eye according to claim 6, **characterized in that** at least one pressure element (6) which can be pretensioned and acts in the longitudinal direction is arranged between the holding element (5) and the flange (1).

8. A drawbar eye according to claim 7, **characterized in that** the holding element (5) comprises at least one recess (51) and/or at least one elevation which forms a twist guard together with the at least one pressure element (6).

9. A drawbar eye according to claim 8, **characterized in that** the twist guard is formed by a rolling element (61), especially a ball, cylinder or the like, which engages in the at least one recess (51) of the holding element (5) and which is pressurized by the at least one pressure element (6).

10. A drawbar eye according to one of the claims 1 to 9, **characterized in that** at least one rib (22) or the like is formed on the spacer element (2), which rib is connected with the flange (1) in one of the lateral central regions (12).

11. A drawbar eye according to one of the claims 1 to 10, **characterized in that** the spacer element (2) and the flange (1) are arranged integrally.

## Revendications

1. Anneau d'attelage d'un attelage avec un élément d'attelage (3) présentant en particulier un anneau (31), un coussinet sphérique ou similaire, un élément d'écartement (2) et une bride (1) ayant une surface en plan sensiblement carrée, avec des zones de coins (11) et des zones de milieu de côté (12) disposées entre les zones de coins (11) le long des côtés (13) de la bride (1), dans lequel les zones de coin (11) comportent des ouvertures de fixation (4) et les zones de milieu de côté (12) sont réalisées sans ouvertures de fixation (4), au moins quatre ouvertures de fixation (4) étant prévues dans une rangée sensiblement horizontale (41) et au moins quatre ouvertures de fixation (4) dans une rangée sensiblement verticale (42), **caractérisé en ce que** trois ouvertures de fixation (4) sont prévues dans chacune des zones de coin (11), quatre des ouvertures de fixation (4) étant disposées en deux rangées sensiblement horizontales (41) et en deux rangées sensiblement verticales (42).

2. Anneau d'attelage selon la revendication 1, **caractérisé en ce que** les zones de milieu de côté (12) s'étendent sur au moins 20 % de l'étendue longitudinale des côtés (13) de la bride (1).

3. Anneau d'attelage selon l'une des revendications 1 à 2, **caractérisé en ce que** dans au moins une des rangées (41, 42), la distance (b) entre les ouvertures de fixation (4) voisines de zones de coin (11) différentes est un nombre entier multiple, en particulier double, de la distance (a) entre les ouvertures de fixation (4) voisines dans une même zone de coin (11).

4. Anneau d'attelage selon l'une des revendications 1 à 3, **caractérisé en ce que** l'élément d'écartement (2) présente une zone de transition (21) arrondie qui est reliée à la bride (1).

5. Anneau d'attelage selon la revendication 4, **caractérisé en ce que** le rayon (r) de l'arrondi est égal ou supérieur au diamètre (d) d'au moins une des ouvertures de fixation (4).

6. Anneau d'attelage selon l'une des revendications 1 à 5, **caractérisé en ce que** l'élément d'attelage (3) comprend un élément rotatif (32) qui est supporté avec possibilité de rotation dans l'élément d'écartement (2), de manière connue en soi, autour d'un axe de rotation (33) et qui est fixé au moyen d'un élément de rétention (5), en particulier d'une bague soudée ou similaire, dans le sens longitudinal de l'axe de rotation (33), et **en ce que** la bride (1) présente une ouverture de réception (14) ouverte sur le bord pour recevoir au moins une partie de l'élément de rétention (5).

7. Anneau d'attelage selon la revendication 6, **caractérisé en ce qu'**il est prévu entre l'élément de rétention (5) et la bride (1) au moins un élément presseur (6) pouvant être précontraint et agissant dans le sens longitudinal de l'axe de rotation (33).

8. Anneau d'attelage selon la revendication 7, **caractérisé en ce que** l'élément de rétention (5) présente au moins un évidemment (51) et/ou au moins une saillie qui forme une sécurité contre la torsion avec l'au moins un élément presseur (6).

9. Anneau d'attelage selon la revendication 8, **caractérisé en ce que** la sécurité contre la torsion est formée par un élément de roulement (61) se mettant en prise dans l'au moins un évidement (51) de l'élément de rétention (5) et soumis à l'action de l'au moins un élément presseur (6), en particulier une bille, un cylindre ou similaire.

10. Anneau d'attelage selon l'une des revendications 1 à 9, **caractérisé en ce qu'**il est prévu formée sur l'élément d'écartement (2) au moins une nervure (22) ou similaire, qui est reliée à la bride (1) dans une des zones de milieu de côté (12).

11. Anneau d'attelage selon l'une des revendications 1 à 10, **caractérisé en ce que** l'élément d'écartement (2) et la bride (1) sont formés d'un seul tenant.
